# EUROPÄISCHE PATENTSCHRIFT

(11) **EP 2 702 292 B1**
(45) Veröffentlichungstag und Bekanntmachung des Hinweises auf die Patenterteilung: **25.03.2015**
(21) Anmeldenummer: 12716000.0
(22) Anmeldetag: 20.04.2012
(51) Int. Cl.: F16D 63/00, B65G 21/00, B66B 29/00, B66B 5/00

(54) **FAHRTREPPE ODER FAHRSTEIG MIT EINER STUFEN- ODER PALETTENBAND-BLOCKIERVORRICHTUNG**
MOVING STAIRCASE OR MOVING WALKWAY HAVING A STEP OR PALLET BELT LOCKING DEVICE
ESCALIER ROULANT OU TROTTOIR ROULANT COMPRENANT UN DISPOSITIF DE BLOCAGE DE LA BANDE À MARCHES OU DE LA BANDE À PALETTES

(30) Priorität: 29.04.2011 EP 11164356
(43) Veröffentlichungstag der Anmeldung: 05.03.2014
(73) Patentinhaber: Inventio AG, 6052 Hergiswil (CH)
(72) Erfinder: MAKOVEC, Christoph, A-2700 Wiener Neustadt (AT); ILLEDITS, Thomas, A-2491 Neufeld (AT); HAUER, Uwe, 31582 Nienburg (DE); MATHEISL, Michael, A-2331 Vösendorf (AT)
(86) Internationale Anmeldenummer: PCT/EP2012/057283
(87) Internationale Veröffentlichungsnummer: WO 2012/146539

(56) Entgegenhaltungen:
- GB-A- 1 141 699

## Beschreibung

Die Erfindung betrifft eine Fahrtreppe mit einem Stufenband oder einen Fahrsteig mit einem Palettenband, wobei die Stufen beziehungsweise Paletten an mindestens einer, zwischen zwei Umlenkbereichen umlaufenden Transportkette angeordnet und mit dieser verbunden sind.

Solche Fahrtreppen beziehungsweise Fahrsteige werden seit langem hergestellt und eingesetzt. Das Stufenband beziehungsweise Palettenband, auf welchem die Benutzer der Fahrtreppe oder des Fahrsteiges während des Transportvorganges stehen, wird von mindestens einem Antriebsmotor angetrieben. Dessen Drehmoment wird über ein Getriebe beziehungsweise einen Antriebsstrang auf ein Kettenrad übertragen. Der zwischen der Motorwelle und dem Kettenrad angeordnete Antriebsstrang weist üblicherweise ein Untersetzungsgetriebe auf, um die hohen Drehzahlen des Antriebsmotors zu untersetzen. Ferner verfügt die Fahrtreppe oder der Fahrsteig über eine Bremseinrichtung, die auf den Antriebsstrang oder direkt auf den Antriebsmotor einwirkt, um das Stufenband beziehungsweise Palettenband zu bremsen.

In der WO2009/059627 A1 wird eine Bremse offenbart, die auf das Kettenrad einwirkt. Das Kettenrad weist Vorsprünge auf, welche im Bremsfall beschreibungsgemäß an einer eingerückten Bremsgabel formschlüssig anstehen sollen. Die Bremsgabel steht im eingerückten Zustand daher einer weiteren Bewegung des anstehenden Vorsprungs in dessen Bewegungsrichtung im Wege. Ferner wird in der Beschreibung erwähnt, dass die Bremse auch kraftschlüssig auf das Kettenrad wirken könne.

In der US 3,830,344 A wird ferner eine Backenbremse offenbart, deren Bremsbacken im Bremsfall mit einer bestimmten Kraft gegen eine Bremsscheibe gedrückt werden, wobei die Bremsscheibe auf der Welle des Antriebsmotors angeordnet ist. Durch diese Kraft wird am Umfang der Bremsscheibe eine Reibungskraft erzeugt, die dem Drehmoment des Antriebsmotors beziehungsweise des Kettenrades entgegenwirkt, welches über den Antriebsstrang mit dem Antriebsmotor verbunden ist. Durch diese Bremse kann ein Stufenband oder Palettenband bis zum Stillstand abgebremst werden, wobei im Stillstand ein Kraftschluss (Haftreibung) zwischen Bremsbacke und Bremsscheibe eintritt.

GB 1 114 617 offenbart eine Blockiervorrichtung gemäß dem Oberbegriff des unabhängigen Anspruchs 1 für eine Transportkette.

Das Stufenband beziehungsweise Palettenband muss bei Bedarf oder in regelmäßigen Abständen gewartet werden. Dabei können auch umfangreiche Arbeiten am Stufenband oder Palettenband anfallen. Beispielsweise müssen beschädigte Stufen oder Paletten ausgetauscht werden, an der Transportkette sind Verschleißteile wie Führungsrollen oder Gleitführungen auszutauschen, die Laufbahn der Führungsrollen oder Gleitführungen zu reinigen oder es ist gar die ganze Transportkette oder die Laufbahn auszuwechseln. Diese Arbeiten sind für den Wartungsfachmann nicht ungefährlich, da beim Entfernen von Teilen der Fahrtreppe das Stufenband oder Palettenband selbständig in Bewegung geraten kann, beispielsweise wenn nicht nur am Stufenband, sondern auch am Arbeitsstrang oder Antriebsmotor Teile ausgewechselt werden müssen. Zur Vermeidung von Unfällen sind deshalb die Wartungshinweise des Herstellers und die Abfolge der Wartungsarbeitsschritte genau einzuhalten.

Aufgabe der vorliegenden Erfindung ist es daher, eine Fahrtreppe oder einen Fahrsteig zu schaffen, an dessen Stufenband beziehungsweise Palettenband gefahrlos Wartungsarbeiten durchgeführt werden können.

Diese Aufgabe wird erfindungsgemäß durch eine Fahrtreppe oder einen Fahrsteig mit den Merkmalen des unabhängigen Anspruchs 1 gelöst. Bevorzugte Weiterbildungen der Fahrtreppe oder des Fahrsteigs sind durch die jeweiligen abhängigen Ansprüche definiert.

Eine Fahrtreppe weist ein Stufenband, ein Fahrsteig weist ein Palettenband auf. Das Stufen- oder Palettenband weist mindestens eine Transportkette auf, die zwischen einem ersten und einem zweiten Umlenkbereich der Fahrtreppe oder des Fahrsteiges umlaufend angeordnet ist und an welcher Transportkette Stufen beziehungsweise Paletten angeordnet und mit der Transportkette verbunden sind. Ferner weist die Fahrtreppe oder der Fahrsteig mindestens eine Blockiervorrichtung auf, die feststehend angeordnet ist. Diese weist mindestens einen Blockierarm auf, welcher Blockierarm in eine Freigabeposition beziehungsweise in eine Eingriffsposition bringbar ist und in der Eingriffsposition in mindestens einen Gliederzwischenraum der Transportkette eingreift. In der Freigabeposition ist der Blockierarm vollständig von der Transportkette entkoppelt, wodurch diese bewegbar ist. Ferner ist der Blockierarm in der jeweiligen Freigabeposition beziehungsweise Eingriffsposition feststellbar.

Um ein Starten eines Antriebsmotors der Fahrtreppe oder des Fahrsteigs zu unterbinden wenn die Blockiervorrichtung in der Eingriffsposition ist, weist die Blockiervorrichtung ein Schaltelement zur Unterbrechung der Stromzufuhr des Antriebmotors auf Ferner kann die Stromzufuhr zu einer Steuerungseinheit der Fahrtreppe oder des Fahrsteiges unterbrochen sein und/oder die Motorschütze des Antriebsmotors. Gattungsgemäß ist die Stromzufuhr zugeschaltet, wenn der Blockierarm in der Freigabeposition ist und die Stromzufuhr unterbrochen, wenn der Blockierarm in der Eingriffsposition ist. Vorzugsweise wirkt bei Vorhandensein mehrerer Blockierarme jeder Blockierarm auf ein zugeordnetes Schaltelement. Die Schaltelemente jedes Blockierarms sind derart verschaltet, dass die Stromzufuhr zum Antriebsmotor unterbrochen bleibt, wenn auch nur einer der Blockierarme in der Eingriffsposition ist.

Im Zusammenhang mit der vorliegenden Erfindung ist unter dem Merkmal, "dass der Blockierarm in mindestens einen Gliederzwischenraum der Transportkette eingreift" zu verstehen, dass der Blockierarm eine geeignete Ausformung, beispielsweise mindestens einen Vorsprung, einen Zahn, einen Nocken, einen Haken eine Klaue oder einen Greifer aufweist, der in Zwischenräume der Transportkette, beispielsweise zwischen die Kettenglieder ragt. Ein in der Eingriffsposition befindlicher Blockierarm ist somit in mindestens einem Gliederzwischenraum der Transportkette im Eingriff. Diese ineinander greifenden Konturen stehen gegeneinander an, wenn sich die Transportkette bewegen will und die Transportkette kann sich nur noch innerhalb des zwischen den Konturen vorhandenen Spiels bewegen. Vorzugsweise greift die Ausformung zwischen die Gliederzwischenräume ein, welche zwischen den Außenlaschen der Transportkette vorhanden sind.

Zum Antreiben der Transportkette beinhaltet einer dieser Umlenkbereiche üblicherweise ein drehbar gelagertes Kettenrad, dessen Zähne in die Transportkette eingreifen. Dieses Kettenrad ist über einen Antriebsstrang mit einem Antriebsmotor verbunden. Die erfindungsgemäße Blockiervorrichtung erhöht die Sicherheit für das Wartungspersonal enorm. Alle bekannten Bremsvorrichtungen wirken auf den Antriebsstrang ein, der zwischen dem Antriebsmotor und dem Stufenband angeordnet ist. Sobald dieser Antriebsstrang unterbrochen wird und durch diese Unterbrechung die Bremse auch abgekoppelt wird, kann sich das Stufenband oder Palettenband ungewollt drehen. Dies ist besonders gefährlich, wenn beispielsweise Paletten des Fahrsteiges oder Stufen der Fahrtreppe zwecks Austauschs entfernt werden. Durch das Entfernen entstehen Lücken beziehungsweise Fallräume im Stufenband oder Palettenband. Durch den Aus- und Einbau von Stufen oder Paletten kann zwischen dem Vorlauf und dem Rücklauf des Stufenbandes oder Palettenbandes ein Massenunterschied entstehen, welcher bei Niveauunterschieden der beiden Umlenkbereiche ein Vortriebsmoment erzeugt und bei ungebremstem oder unterbrochenem Antriebsstrang das ungesicherte Stufenband in Bewegung setzt. Noch gefährlicher ist der Ein- und Ausbau einer Transportkette. Beim Lösen und Entfernen von Kettenlaschen und Kettenteilen können die losen Enden der geöffneten Kette von einem ungebremsten Kettenrad abspulen oder sogar über die Zähne eines blockierten Kettenrades rutschen und zu schweren Unfällen führen. Durch den direkten Eingriff des Blockierarms in die Transportkette können alle denkbaren, die Transportkette betreffenden Risiken bei Wartungsarbeiten eliminiert werden.

Die Blockiervorrichtung kann im ersten oder im zweiten Umlenkbereich feststehend angeordnet sein. Selbstverständlich kann auch in beiden Umlenkbereichen eine Blockiervorrichtung angeordnet sein.

Der in die Freigabeposition beziehungsweise in die Eingriffsposition bringbare Blockierarm ist zu diesem Zwecke vorzugsweise zwischen diesen Positionen verschwenkbar gelagert.

Die Blockiervorrichtung kann einen Lagerbock aufweisen, der eine der Freigabeposition entsprechende erste Einraststelle und eine der Eingriffsposition entsprechende zweite Einraststelle beinhaltet. Ferner weist der Blockierarm ein Verriegelungssegment auf, wobei der Blockierarm am Lagerbock schwenkbar gelagert ist und der Blockierarm durch Einrasten des Verriegelungssegments in den Einraststellen in der Freigabeposition oder in der Eingriffsposition feststellbar ist. Die Verriegelung in den beiden Positionen stellt sicher, dass sich der Blockierarm nicht selbsttätig bewegt und die Transportkette unbeabsichtigt freigibt beziehungsweise blockiert.

Vorzugsweise ist das Verriegelungssegment am Blockierarm linear verschiebbar geführt und durch ein auf das Verriegelungssegment wirkendes Federelement in der ersten oder zweiten Einraststelle gesichert.

Damit die Blockiervorrichtung benutzerfreundlich bedienbar ist, kann das Verriegelungssegment einen Griff und eine Trittzunge aufweisen. Der Griff dient dem Herausziehen des Verriegelungssegments aus einer der beiden Einraststellen. Sofern das Verriegelungssegment nicht von selbst durch die Federkraft des Federelements in die Einraststelle einrastet, kann durch einen Fußtritt auf die Trittzunge das stockende Verriegelungssegment in die Einraststelle gedrückt werden.

Damit die Blockiervorrichtung präzise in die Transportkette eingreifen kann, muss sie zu dieser ausgerichtet sein. Vorzugsweise ist im ersten und/oder zweiten Umlenkbereich eine ortsfeste Plattenkonsole angeordnet. diese Plattenkonsole kann mindestens ein Langloch oder mindestens eine Nut mit Nutsteinen aufweisen. Das Langloch oder die Nut sind in der Ebene zur Längserstreckung der Fahrtreppe oder des Fahrsteigs und orthogonal zu dieser Längserstreckung angeordnet. Erfindungsgemäß ist mindestens eine Blockiervorrichtung mittels Schrauben, Nieten, Schweissen, Durchsetzfügen oder Kleben an der ortsfesten Plattenkonsole festgelegt.

Wenn das Stufenband oder Palettenband zwei zueinander parallel angeordnete, umlaufende Transportketten aufweist und die Stufen beziehungsweise Paletten zwischen den Transportketten angeordnet sind, kann zur Erhöhung der Sicherheit die Blockiervorrichtung zwei Blockierarme aufweisen. Jeder Transportkette ist somit je ein Blockierarm zugeordnet.

Eine noch größere Sicherheit ist erreichbar, wenn im ersten Umlenkbereich und im zweiten Umlenkbereich je eine Blockiervorrichtung mit zwei Blockierarmen angeordnet ist. Jeder Transportkette sind dann je ein Blockierarm des ersten Umlenkbereichs und je ein Blockierarm des zweiten Umlenkbereichs zugeordnet.

Um deren Bedienung zu erleichtern, können gegebenenfalls die beiden Blockierarme einer Blockiervorrichtung auch miteinander mechanisch verbunden sein. Zu diesem Zweck ist zwischen den beiden Blockierarmen einer Blockiervorrichtung ein Verbindungsstück angeordnet, welches die Verriegelungssegmente beider Blockierarme verbindet. Dadurch können die beiden Verriegelungssegmente gleichzeitig bewegt werden.

Vorzugsweise ist mindestens ein Kettenrad im Bereich der Eingriffsposition angeordnet. Dieses dient dann nicht nur zur Umlenkung der Transportkette vom Vorlauf zum Rücklauf, sondern gleichzeitig auch als Gegenhalterung der Transportkette. Dadurch kann eine in der Eingriffsposition separat angeordnete Gegenhalterung vermieden werden. Eine Gegenhalterung kann dann notwendig sein, wenn die Transportkette nicht ausreichend straff zwischen den Umlenkbereichen gespannt ist oder gar unterbrochen ist, so dass die Transportkette beispielsweise durch Erschütterungen vom Blockierarm und/oder vom Kettenrad springen kann. Durch das Kettenrad als Gegenhalterung ist auch eine lose Kette zwischen dem Blockierarm und dem Kettenrad gefangen. Ferner kann sich auch das Kettenrad durch den Eingriff des Blockierarms in die Transportkette und den unmittelbar anschließenden formschlüssigen Eingriff der Zähne des Kettenrades in die blockierte Transportkette nicht mehr bewegen.

Die in den Umlenkbereichen angeordnete Blockiervorrichtung ist hervorragend einsehbar und es kann vor dem Arbeitsbeginn am Stufenband oder Palettenband problemlos überprüft werden, ob der Blockierarm in der Freigabeposition oder in der Eingriffsposition ist. Auch wenn die Blockiervorrichtung auf einfache Weise visuell kontrollierbar ist, kann der Antriebsmotor durch Unachtsamkeit eingeschaltet werden. Dadurch würde eine zwischen dem Antriebsmotor und der Transportkette angeordnete Überlastsicherung (Kupplung) des Antriebsstranges unnötig beansprucht.

Selbstverständlich müssen die Blockierarme nicht zwingend von Hand zwischen der Freigabeposition und der Eingriffsposition verschwenkt und/oder verriegelt werden. Die Blockiervorrichtung kann mindestens einen Stellantrieb aufweisen, mittels welchem der Blockierarm verschwenkbar und in der Eingriffsposition beziehungsweise in der Freigabeposition verriegelbar ist. Selbstverständlich kann auch nur die Verschwenkung des Blockierarms oder die Verriegelung durch Verschiebung des Verriegelungssegments motorisch erfolgen.

Die erfindungsgemäße Blockiervorrichtung kann ferner auch als Transportsicherung eingesetzt werden, wenn die Fahrtreppe oder der Fahrsteig im Herstellerwerk teilweise oder sogar vollständig zusammengebaut wird. Langgestreckte Fahrtreppen oder Fahrsteige können auch in mehreren Teilsegmenten beziehungsweise Modulen vormontiert und an die Baustelle angeliefert werden. Diese Teilsegmente können mit Transportketten-Abschnitten versehen sein, welche durch die Blockiervorrichtung gesichert werden. Beim nachfolgenden Transport vom Herstellerwerk bis zum Einbau im Gebäude beziehungsweise in der Baustelle ist durch die in der Eingriffsposition verriegelte Blockiervorrichtung sichergestellt, dass das Stufenband oder Palettenband nicht bewegt werden kann und dadurch keine Person verletzt wird. Überdies ist eine Verstellung der Stufenband- oder Palettenband- Werkseinstellung während des Transports nicht möglich, dadurch wird die Montage der Fahrtreppe oder des Fahrsteiges wesentlich erleichtert.

Die erfindungsgemäße Fahrtreppe beziehungsweise der erfindungsgemäße Fahrsteig wird im Folgenden anhand von Beispielen und mit Bezugnahme auf die Zeichnungen näher erläutert. Darin zeigen:
- Figur 1:: in schematischer Darstellung die bewegten Hauptkomponenten einer Fahrtreppe oder eines Fahrsteiges, insbesondere einen Antriebsmotor, einen Antriebsstrang, ein zwischen zwei Kettenrädern umlaufendes Stufenband oder Palettenband und einen Handlauf mit zugehörender Verbindung zum Antriebsstrang, wobei je ein Kettenrad in einem ersten Umlenkbereich und in einem zweiten Umlenkbereich angeordnet ist und eine im ersten Umlenkbereich angeordneten Blockiervorrichtung;
- Figur 2:: in dreidimensionaler Ansicht einer der beiden Umlenkbereiche einer Fahrtreppe mit zwei Transportketten, wobei die Stufen zwischen den Transportketten angeordnet sind und eine Blockiervorrichtung in einer ersten Ausführung, deren Blockierarme in der Eingriffsposition dargestellt sind;
- Figur 3:: in dreidimensionaler Ansicht einer der beiden Umlenkbereiche einer Fahrstreppe mit zwei Transportketten, wobei die Stufen zwischen den Transportketten angeordnet sind und eine Blockiervorrichtung in einer zweiten Ausführung, deren Blockierarme miteinander gekoppelt und in der Freigabeposition dargestellt sind;
- Figur 4:: in geschnittenem Aufriss eine Blockiervorrichtung mit einem Lagerbock und mit einem Blockierarm;
- Figur 5:: im Aufriss eine Blockiervorrichtung deren Blockierarm mittels eines Stellantriebs zwischen einer Freigabeposition und einer Eingriffsposition bewegt werden kann.

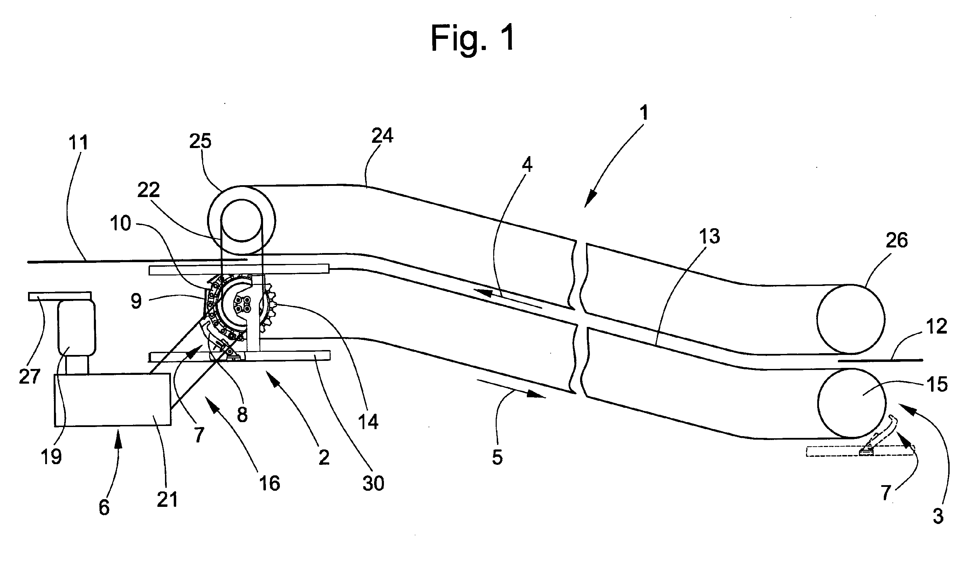

Figur 1 zeigt in schematischer Darstellung die bewegten Hauptkomponenten einer Fahrtreppe oder eines Fahrsteiges 1. Eine Fahrtreppe 1 oder ein Fahrsteig 1 weist einen ersten Umlenkbereich 2 und einen zweiten Umlenkbereich 3 auf, über deren Antrittsplatten 11, 12 die Benutzer die Fahrtreppe 1 oder den Fahrsteig 1 betreten beziehungsweise verlassen. Obwohl nur im ersten Umlenkbereich 2 dargestellt, weisen beide Umlenkbereiche 2, 3 eine Trägerstruktur 30 auf, die in der Gebäudestruktur eines nicht dargestellten Gebäudes ortsfest verankert sind. Zwischen den beiden Umlenkbereichen 2, 3 ist ein Stufenband 13 beziehungsweise Palettenband 13 angeordnet, welches mindestens eine Transportkette 10 und an der Transportkette 10 angeordnete Stufen 9 oder Paletten 9 beinhaltet. Nachfolgend und für alle Figuren geltend, wird der besseren Lesbarkeit wegen nur noch die Fahrtreppe 1, das Stufenband 13 und Stufen 9 erwähnt, sinngemäß sind aber damit auch der Fahrsteig 1, das Palettenband 13 und Paletten 9 gemeint, da die Erfindung für Fahrtreppen 1 und Fahrsteige 1 gleichermaßen geeignet ist. In jedem Umlenkbereich 2, 3 ist pro vorhandene Transportkette 10 ein Kettenrad 14, 15 drehbar angeordnet. Das Stufenband 13 und demzufolge die Transportkette 10 ist umlaufend ausgestaltet und weist somit einen durch Pfeile dargestellten Vorlauf 4 und einen Rücklauf 5 auf. Die Drehrichtungsangabe des Stufenbandes 13 durch Pfeile ist nur beispielhaft und zeigt die Fahrtreppe 1 im aufwärts fördernden Betriebsmodus. Selbstverständlich kann die Fahrtreppe 1 auch im abwärts fördernden Betriebsmodus betrieben werden. Die Umlenkung des Stufenbandes 13 vom Vorlauf 4 zum Rücklauf 5 beziehungsweise vom Rücklauf 5 zum Vorlauf 4 erfolgt in den Umlenkbereichen 2, 3 durch die Kettenräder 14, 15. Anstelle des Kettenrades 15 im zweiten Umlenkbereich 3 kann auch eine bogenförmige Führung oder ein Umlenkrad vorhanden sein, die das Stufenband sinngemäß umlenkt.

Weitere bewegte Hauptkomponenten sind ein Antriebsmotor 19, ein zwischen dem Antriebsmotor 19 und dem Kettenrad 14 des ersten Umlenkbereichs 2 angeordneter Antriebsstrang 6 und ein mitlaufender Handlauf 24. Auch der Handlauf 24 ist umlaufend ausgestaltet und zwischen zwei Umlenkrädern 25, 26 angeordnet. Das im ersten Umlenkbereich 2 angeordnete Umlenkrad 25 ist mittels eines Handlaufantriebs 22 mit dem Antriebsstrang 6 verbunden. Der Antriebsstrang 6 umfasst ein am Antriebsmotor 19 angeflanschtes Zahnradgetriebe 21 und ein Kettengetriebe 16, so dass die Drehbewegung einer nicht dargestellten Motorwelle des Antriebsmotors 19 untersetzt auf das Kettenrad 14 des ersten Umlenkbereichs 2 und das Umlenkrad 25 übertragen werden kann. Selbstverständlich kann der Antriebsstrang 6 auch mit dem Kettenrad 15 des zweiten Umlenkbereichs 3 verbunden sein oder beide Umlenkbereiche 2, 3 je einen Antriebsmotor 19 und einen Antriebsstrang 6 aufweisen. Ferner ist der Antriebsmotor 19 mit einer Betriebsbremse 27 ausgerüstet, welche im Bremsfall das Stufenband 13, den Antriebsstrang 6 und die Motorwelle des Antriebsmotors 19 bremst. Als Betriebsbremse 27 kann beispielsweise eine Backenbremse eingesetzt werden, wie sie in der US 3,830,344 A offenbart ist. Selbstverständlich ist auch eine Bandbremse oder Scheibenbremse als Betriebsbremse 27 einsetzbar.

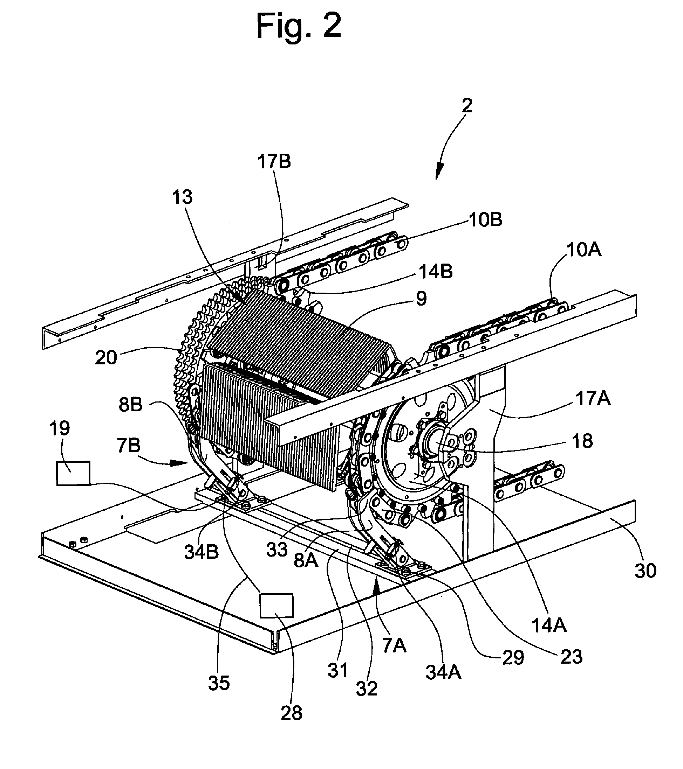

Im ersten Umlenkbereich 2 ist ferner eine Blockiervorrichtung 7 angeordnet. Deren Blockierarm 8 ist in der Freigabeposition dargestellt was bedeutet, dass der Blockierarm 8 nicht in die Transportkette 10 eingreift. Als Alternative kann, wie mit unterbrochener Linie angedeutet, die Blockiervorrichtung 7 auch im zweiten Umlenkbereich 3 angeordnet sein. Selbstverständlich können sowohl im ersten Umlenkbereich 2 als auch im zweiten Umlenkbereich 3 je eine Blockiervorrichtung 7 angeordnet sein. In der Beschreibung der Figuren 2 bis 5 ist nachfolgend der Aufbau der Blockiervorrichtung 7 näher beschrieben.

Figur 2 zeigt in dreidimensionaler Ansicht den ersten Umlenkbereich 2 der in der Figur 1 dargestellten Fahrtreppe 1 mit zwei Transportketten 10A, 10B. Der erste Umlenkbereich 2 beinhaltet eine Trägerstruktur 30, welche Teil eines nicht weiter dargestellten Fachwerkes der Fahrtreppe 1 ist und welches Fachwerk den ersten Umlenkbereich 2 mit dem zweiten Umlenkbereich 3 möglichst biege- und verwindungssteif verbindet. Die Trägerstruktur 30 weist zwei Lagerflansche 17A, 17B mit Lagern auf. Zwischen den Lagerflanschen 17A, 17B ist eine Hauptwelle 18 drehbar gelagert. An der Hauptwelle 18 sind ein dreispuriges Antriebskettenrad 20 sowie zwei Kettenräder 14A, 14B angeordnet. Das Antriebskettenrad 20 ist Teil des in der Figur 1 dargestellten Kettengetriebes 16. Jedes der Kettenräder 14A, 14B wird am Umfang ungefähr zur Hälfte von einer zugeordneten Transportkette 10A, 10B umfasst. Die Transportketten 10A, 10B sind in der Figur 2 teilweise unterbrochen dargestellt, damit auch die Zähne der Kettenräder 14A, 14B einsehbar sind. Zwischen den beiden Transportketten 10A, 10B sind die Stufen 9 angeordnet und verbinden die Transportketten 10A, 10B zu einem Stufenband 13. Der besseren Einsehbarkeit wegen sind in Figur 2 nur zwei Stufen 9 dargestellt.

Parallel zur Mittellängsachse der Hauptwelle 18 ist eine Plattenkonsole 31 fest mit der Trägerstruktur 30 verbunden. Die Plattenkonsole 31 weist ein Langloch 32 auf, welches sich ebenfalls parallel zur Mittellängsachse der Hauptwelle 18 erstreckt. Selbstverständlich kann das Langloch 23 der Plattenkonsole 31 auch dadurch gebildet sein, dass anstelle einer Platte zwei Flacheisen im Abstand der Breite des Langlochs 32 an der Trägerstruktur 30 befestigt werden. Mittels Befestigungselementen, beispielsweise Schrauben 29 sind zwei Blockiervorrichtungen 7A, 7B in einer ersten Ausführung angeordnet. Anstelle von Schrauben können die Blockiervorrichtungen 7A, 7B auch durch Schweißen, Durchsetzfügen, Vernieten, Verkleben und dergleichen mehr ortsfest mit der Trägerstruktur 30 verbunden sein. Selbstverständlich können die beiden Blockiervorrichtungen 7A, 7B zu einer Blockiervorrichtung mit zwei Blockierarmen 8A, 8B zusammengefasst sein.

Die Blockierarme 8A, 8B der Blockiervorrichtungen 7A, 7B sind in der Eingriffsposition dargestellt. Aufgrund des Langlochs 32 kann jede Blockiervorrichtung 7A, 7B zur zugeordneten Transportkette 10A, 10B präzise ausgerichtet werden, so dass der entsprechende Blockierarm 8A, 8B wie dargestellt, in mindestens einen der Gliederzwischenräume der Transportkette 10A, 10B eingreifen kann. Mit Gliederzwischenraum ist ein Zwischenraum zwischen den Kettenlaschen 23 gemeint und zwar sowohl an den Außenseiten der Transportkette 10A, 10B, als auch in der Innenseite der Transportkette 10A, 10B, in den auch ein Zahn des Kettenrades 14A, 14B eingreift. Im dargestellten Ausführungsbeispiel greifen zwei Klauen 33 des gabelförmig ausgebildeten Blockierarms 8A, 8B in Gliederzwischenräume an zwei Außenseiten der Transportkette 10A, 10B ein, da der Gliederzwischenraum in der Innenseite der Transportkette 10A, 10B durch einen Zahn des Kettenrades 14A, 14B besetzt ist. Selbstverständlich können die Blockiervorrichtungen 7A, 7B an der Plattenkonsole 31 auch durch Verschweißen, Verkleben, Vernieten, mittels Durchsetzfügen und dergleichen mehr festgelegt sein.

Ferner ist in Figur 2 die Stromversorgung des Antriebsmotors 19 mit einer Sicherheitseinrichtung schematisch dargestellt. Jede der beiden Blockiervorrichtungen 7A, 7B weist ein Schaltelement 34A, 34B auf, dessen Schaltstrecke je nach Stellung des Blockierarms 8A, 8B geöffnet oder geschlossen ist. Die Verbindung des Antriebsmotors 19 zum Stromnetz 28 wird wie dargestellt, über die Schaltelemente 34A, 34B unterbrochen. Die Schaltelemente 34A, 34B sind durch ein Verbindungskabel 35 mit dem Stromnetz 28 und mit dem Antriebsmotor 19 derart verbunden, dass ein einziges geöffnetes Schaltelement 34A, 34B genügt, um die Verbindung zum Stromnetz 28 zu unterbrechen. Damit ist sichergestellt, dass die Verbindung des Antriebsmotors 19 zum Stromnetz 28 immer dann unterbrochen ist, sobald einer der Blockierarme 8A, 8B in der Eingriffsposition ist.

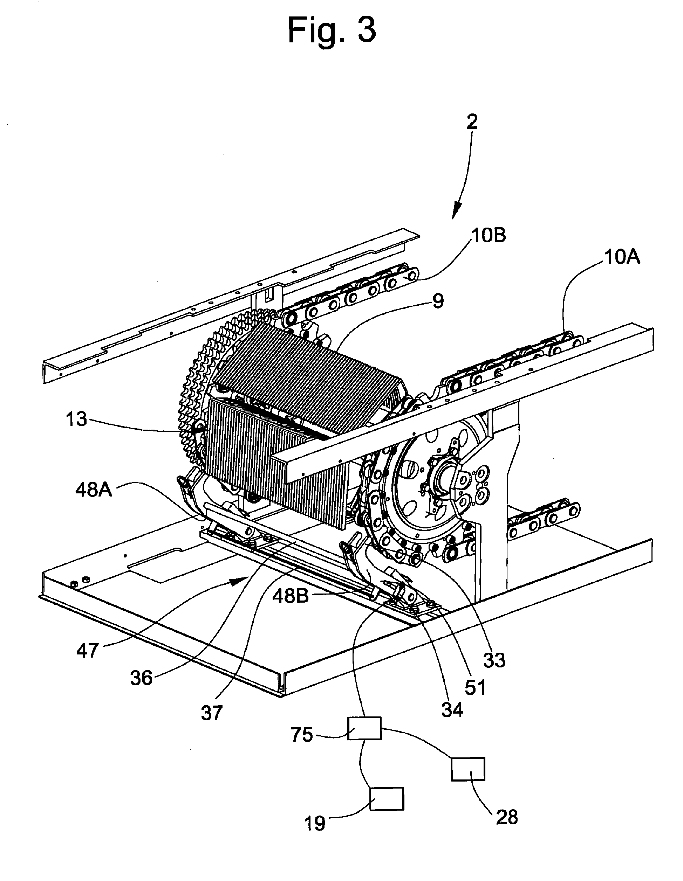

Figur 3 zeigt in dreidimensionaler Ansicht im Wesentlichen dieselben Elemente wie die Figur 2, weshalb nachfolgend nur die geänderten Elemente beschrieben werden. Der besseren Übersicht wegen sind auch in der Figur 3 nur zwei Stufen 9 dargestellt. Anstelle des Stufenbandes 13 kann auch ein Palettenband 13 vorhanden sein. Dieses unterscheidet sich vom Stufenband lediglich darin, dass anstelle der Stufen 9, Paletten 9 zwischen den beiden Transportketten 10A, 10B angeordnet sind. Die Blockiervorrichtung 47 unterscheidet sich von der in Figur 2 dargestellten ersten Ausführung dadurch, dass deren Blockierarme 48A, 48B miteinander verbunden sind und eine Einheit bilden. Ferner sind die Blockierarme 48A, 48B in der Freigabeposition dargestellt.

Die in der Freigabeposition dargestellten Blockierarme 48A, 48B sind vollständig von den Transportketten 10A, 10B entkoppelt, so dass sich das Stufenband 13 bestimmungsgemäß bewegen und die Benutzer der Fahrtreppe fördern kann. Gut erkennbar sind auch die vier Klauen 33 der in die Freigabeposition ausgerückten Blockierarme 48A, 48B. An Stelle der Klauen 33 können selbstverständlich auch anders ausgebildete Vorsprünge und Vorrichtungen wie Nocken, Haken, Greifer, Riegel und dergleichen mehr am Blockierarm 48A, 48B ausgebildet sein die geeignet sind, in mindestens einen Gliederzwischenraum der Transportkette 10A, 10B einzugreifen.

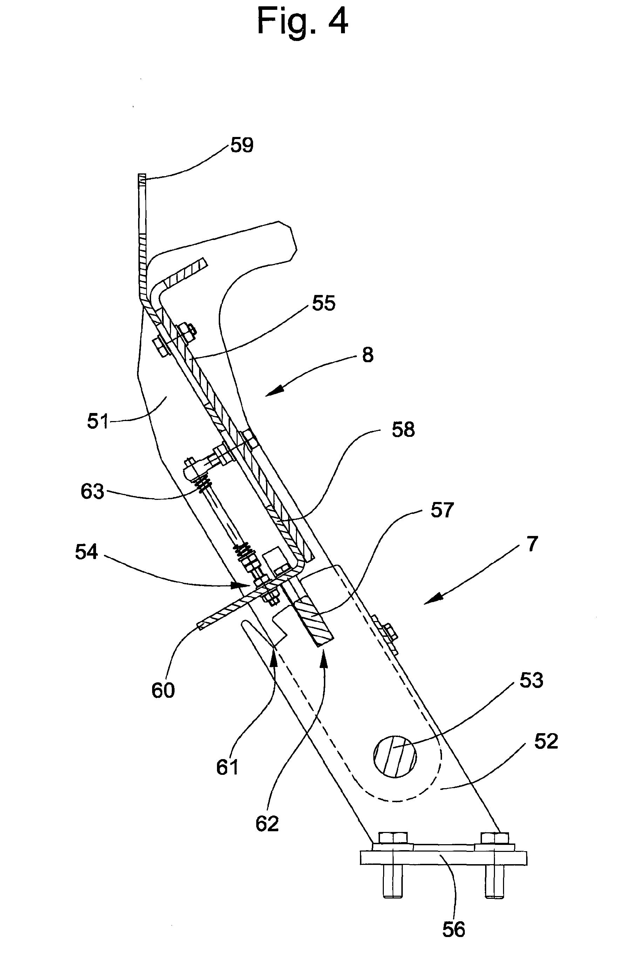

Die Blockierarme 48A, 48B können mindestens einfach, vorzugsweise aber wie dargestellt, zweifach miteinander verbunden sein. Die erste Verbindung ist eine Verbindungsstange 36, die die Klauen 33 aufweisenden Armseitenteile 51 der Blockierarme 48A, 48B miteinander verbindet. Die zweite Verbindung ist ein Verbindungsstück 37, welches die in der Figur 4 näher beschriebenen Verriegelungssegmente miteinander verbindet. Da beide Blockierarme 48A, 48B durch die mechanisch starre Verbindung nur gleichzeitig verschwenkt werden können, ist auch nur ein Schaltelement 34 zur Absicherung der Verbindung des Antriebsmotors 19 zum Stromnetz 28 notwendig. Um ein Starten des Antriebsmotors 19 zu unterbinden wenn die Blockiervorrichtung 47 beziehungsweise deren Blockierarme 48A, 48B in der Eingriffsposition sind, kann das Schaltelement 34 die Stromzufuhr zu einer Steuerungseinheit 75 der Fahrtreppe oder des Fahrsteiges unterbrechen und/oder auf die Motorschütze des Antriebsmotors 19 wirken. Gattungsgemäß ist die Stromzufuhr vom Stromnetz 28 zugeschaltet, wenn die Blockierarme 48A, 48B in der Freigabeposition sind und die Stromzufuhr unterbrochen, wenn die Blockierarme 48A, 48B in der Eingriffsposition sind.

Figur 4 zeigt in geschnittenem Aufriss eine Blockiervorrichtung 7 mit einem Lagerbock 52 und mit einem Blockierarm 8. Sinngemäß gilt die nachfolgende Beschreibung auch für die Blockiervorrichtungen 7, 7A, 7B, 47 aller vorangehend beschriebener Figuren 1 bis 3. Der Lagerbock 52 in Figur 4 weist eine Grundplatte 56 auf, mit welcher der Lagerbock 52 an einer nicht dargestellten Plattenkonsole festgelegt werden kann. Der Lagerbock 52 weist ferner zwei Einraststellen 61, 62 auf. Die erste Einraststelle 61 definiert die Freigabeposition des Blockierarms 8 und die zweite Einraststelle 62 die Eingriffsposition des Blockierarms 8, wie sie in den vorangehend beschriebenen Figuren 1 bis 3 definiert sind.

Aufgrund der geschnittenen Darstellung ist vom Blockierarm 8 lediglich eines der beiden Armseitenteile 51 dargestellt. Die beiden Armseitenteile 51 sind durch einen geschnitten dargestellten Zwischensteg 55 fest miteinander verbunden und mittels eines Lagerbolzens 53 am Lagerbock 52 schwenkbar gelagert. In den Armseitenteilen 51 und am Zwischensteg 55 ist ein Verriegelungssegment 54 linear geführt. Dieses Verriegelungssegment 54 beinhaltet einen Riegel 57 und ein Führungsteil 58, wobei am Führungsteil 58 ein Griff 59 und eine Trittzunge 60 ausgebildet ist. Die Trittzunge 60 und der Griff 59 dienen der einfachen, manuellen Bedienung des Verriegelungssegments 54. Je nach Position des Blockierarms 8 ruht der Riegel 57 in der ersten Einraststelle 61 oder in der zweiten Einraststelle 62. Um den Blockierarm 8 von der dargestellten Eingriffsposition in die Freigabeposition zu bringen, kann am Griff 59 gezogen werden, bis der Riegel 57 die zweite Einraststelle 62 verlassen hat. Durch anschließendes Verschwenken des Blockierarms 8 kann der Riegel 57 zur ersten Einraststelle 61 die der Freigabeposition entspricht, gebracht, und der Griff 59 losgelassen werden. Durch ein Federelement 63, welches am Führungsteil 58 angreift, wird das Verriegelungssegment 54 beziehungsweise dessen Riegel 57 in die erste Einraststelle 61 gedrückt. Sollte der Riegel 57 mit Hilfe der Federkraft des Federelements 63 nicht vollständig in den Einraststellen 61, 62 einrasten, kann mit einem Fußtritt auf die Trittzunge 60 das Federelement 63 unterstützt werden.

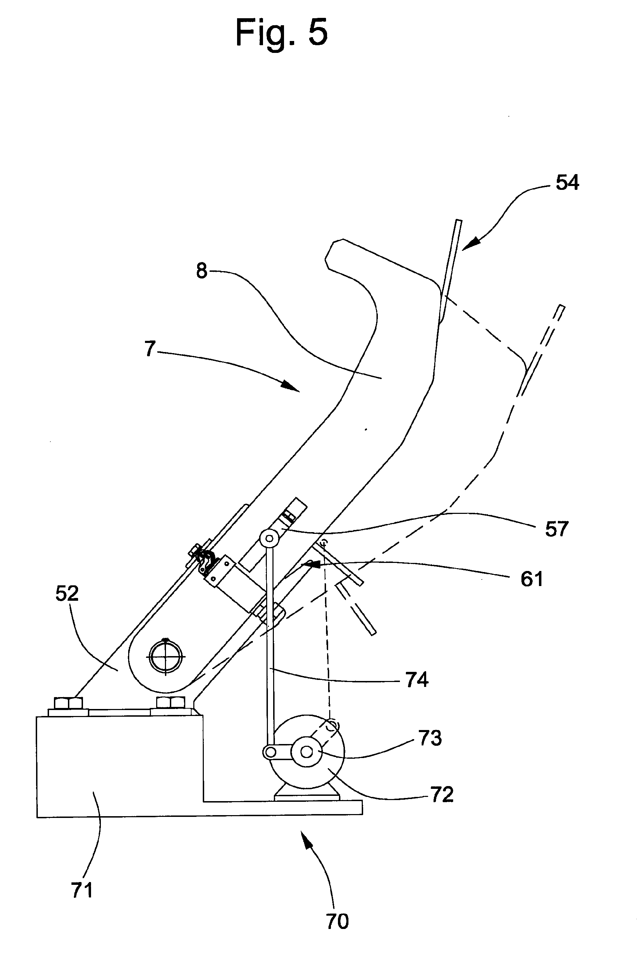

In Figur 5 ist eine Blockiervorrichtung 7 im Aufriss dargestellt, die im Aufbau der in der Figur 4 beschriebenen Blockiervorrichtung entspricht, weshalb identische Bauteile dieselben Bezugszeichen aufweisen. Der einzige Unterschied der in der Figur 5 gezeigten Blockiervorrichtung 7 besteht darin, dass deren Blockierarm 8 mittels eines schematisch dargestellten Stellantriebes 70 zwischen einer Freigabeposition und einer Eingriffsposition bewegt werden kann.

Der Stellantrieb 70 weist einen Sockel 71 auf, der mit dem Lagerbock 52 und mit einem Servomotor 72 fest verbunden ist. Statt des Lagerbocks 52 wird bei diesem Ausführungsbeispiel der Sockel 71 an der nicht dargestellten Plattenkonsole festgelegt. Der Servomotor 72 weist einen Kurbelarm 73 auf, dessen Drehwinkel beispielsweise 130° bis 170° beträgt. Zwischen dem Kurbelarm 73 und dem Riegel 57 des Verriegelungssegments 54 ist eine Bewegungsstange 74 gelenkig angeordnet. Beim Verschwenken des Kurbelarms 73 wird der Riegel 57 durch die Bewegungsstange 74 zuerst aus der nicht einsehbaren zweiten Einraststelle geschoben, bis der obere Totpunkt des aus der Bewegungsstange 74 und dem Kurbelarm 73 bestehenden Kurbeltriebes überschritten wird und der Blockierarm 8 zur ersten Einraststelle 61 verschwenkt wird. Der Riegel 57 folgt dabei der Kontur des Lagerbocks 52 zwischen den beiden Einraststellen. Sobald der Riegel 57 die erste Einraststelle 61 erreicht, wird er durch die weitere Bewegung der Bewegungsstange 74 in die erste Einraststelle 61 hineingezogen. Die Verschwenkung des Blockierarms 8 in umgekehrter Richtung erfolgt sinngemäß durch Umkehr der Schwenkrichtung des Kurbelarms 73 und der Bewegungsstange 74.

Obwohl die Erfindung durch die Darstellung spezifischer Ausführungsbeispiele beschrieben worden ist, ist es offensichtlich, dass zahlreiche weitere Ausführungsvarianten in Kenntnis der vorliegenden Erfindung geschaffen werden können, beispielsweise indem die Merkmale der einzelnen Ausführungsbeispiele miteinander kombiniert und/oder einzelne Funktionseinheiten der Ausführungsbeispiele ausgetauscht werden. Beispielsweise kann bei allen Ausführungsbeispielen jeder Blockierarm einen eigenen Stellantrieb aufweisen. Entsprechend kann aber bei zwei miteinander gekoppelten Blockierarmen auch nur ein Stellantrieb vorhanden sein, um diese gemeinsam von der Freigabeposition in die Eingriffsposition und zurück zu bewegen. Die Automatisierung des Blockierarms kann auch durch zwei voneinander getrennte Stellantriebe erfolgen, wobei der erste Stellantrieb die lineare Bewegung des Riegels und der zweite Stellantrieb die Schwenkbewegung des Blockierarms erzeugt. Selbstverständlich kann die erfindungsgemäße Fahrtreppe beziehungsweise der erfindungsgemäße Fahrsteig ein Stufenband beziehungsweise ein Palettenband aufweisen, welches anstatt einer Transportkette mindestens einen Transportriemen, mindestens ein Transportseil oder mindestens ein Transportband aufweist. Diese müssen erfindungsgemäß Vorsprünge, Ausnehmungen oder Durchbrüche aufweisen, damit der Blockierarm in den Transportriemen, in das Transportseil oder in das Transportband eingreifen kann. Anstelle von Kettenrädern werden sinngemäß Riemen- oder Seilscheiben beziehungsweise Bandtrommeln verwendet. Demzufolge werden entsprechend ausgestaltete Transportriemen, Transportseile oder Transportbänder als Äquivalente zu Transportketten, sowie Riemen- oder Seilscheiben und Bandtrommeln als Äquivalente zu Kettenrädern angesehen und vom Schutzumfang der vorliegenden Ansprüche umfasst.

## Patentansprüche

1. Fahrtreppe (1) mit einem Stufenband (13) oder Fahrsteig (1) mit einem Palettenband(13), welches Stufen- oder Palettenband (13) mindestens eine Transportkette (10, 10A, 10B) aufweist die zwischen einem ersten und einem zweiten Umlenkbereich (2,3) der Fahrtreppe (1) oder des Fahrsteiges (1) umlaufend angeordnet ist und an welcher Transportkette (10, 10A, 10B) Stufen (9) beziehungsweise Paletten (9) angeordnet und mit der Transportkette (10, 10A, 10B) verbunden sind, wobei die Fahrtreppe (1) oder der Fahrsteig (1) mindestens eine Blockiervorrichtung (7, 7A, 7B, 47) beinhaltet die feststehend angeordnet ist und mindestens einen Blockierarm (8, 8A, 8B, 48A, 48B) aufweist, welcher Blockierarm (8, 8A, 8B, 48A, 48B) in eine Freigabeposition beziehungsweise in eine Eingriffsposition bringbar ist und in der Eingriffsposition in mindestens einen Gliederzwischenraum der Transportkette (10, 10A, 10B) eingreift und der Blockierarm in der jeweiligen Freigabeposition beziehungsweise Eingriffsposition feststellbar ist, **dadurch gekennzeichnet, dass** die Blockiervorrichtung (7, 7A, 7B, 47) ein Schaltelement (34, 34A, 34B) zur Unterbrechung der Stromzufuhr eines Antriebmotors (19) der Fahrtreppe (1) oder des Fahrsteiges (1) aufweist, wobei die Stromzufuhr zugeschaltet ist, wenn der Blockierarm (8, 8A, 8B, 48A, 48B) in der Freigabeposition ist und die Stromzufuhr unterbrochen ist, wenn der Blockierarm (8, 8A, 8B, 48A, 48B) in der Eingriffsposition ist.

2. Fahrtreppe (1) oder Fahrsteig (1) nach Anspruch 1, wobei die Blockiervorrichtung (7, 7A, 7B, 47) im ersten und/oder im zweiten Umlenkbereich (2,3) feststehend angeordnet ist.

3. Fahrtreppe (1) oder Fahrsteig (1) nach Anspruch 1 oder 2, wobei der Blockierarm (8, 8A, 8B, 48A, 48B) zwischen der Freigabeposition und der Eingriffsposition verschwenkbar gelagert ist.

4. Fahrtreppe (1) oder Fahrsteig (1) nach einem der Ansprüche 1 bis 3, wobei die Blockiervorrichtung (7, 7A, 7B, 47) einen Lagerbock (52) aufweist der eine der Freigabeposition entsprechende erste Einraststelle (61) und eine der Eingriffsposition entsprechende zweite Einraststelle (62) beinhaltet und der Blockierarm (8, 8A, 8B, 48A, 48B) ein Verriegelungssegment (54) aufweist, wobei der Blockierarm (8, 8A, 8B, 48A, 48B) am Lagerbock (52) schwenkbar gelagert ist und der Blockierarm (8, 8A, 8B, 48A, 48B) durch Einrasten des Verriegelungssegments (54) in den Einraststellen (61, 62) in der Freigabeposition oder in der Eingriffsposition feststellbar ist.

5. Fahrtreppe (1) oder Fahrsteig (1) nach Anspruch 4, wobei das Verriegelungssegment (54) am Blockierarm (8, 8A, 8B, 48A, 48B) linear verschiebbar geführt ist und dieses durch ein auf das Verriegelungssegment (54) wirkendes Federelement (63) in der ersten oder zweiten Einraststelle (61, 62) gesichert ist.

6. Fahrtreppe (1) oder Fahrsteig (1) nach Anspruch 4 oder 5, wobei das Verriegelungssegment (54) einen Griff (59) und eine Trittzunge (60) aufweist.

7. Fahrtreppe (1) oder Fahrsteig (1) nach einem der Ansprüche 1 bis 6, wobei im ersten und/oder zweiten Umlenkbereich (2, 3) eine ortsfeste Plattenkonsole (31) mit mindestens einem Langloch (32) oder mit mindestens einer Nut (32) mit Nutsteinen angeordnet ist, wobei das Langloch (32) oder die Nut (32) in der Ebene zur Längserstreckung der Fahrtreppe (1) oder des Fahrsteiges (1) und orthogonal zu dieser Längserstreckung angeordnet ist, und wobei mindestens eine Blockiervorrichtung (7, 7A, 7B, 47) an der ortsfesten Plattenkonsole (31) festgelegt ist.

8. Fahrtreppe (1) oder Fahrsteig (1) nach einem der Ansprüche 1 bis 7, wobei das Stufenband (13) oder Palettenband (13) zwei zueinander parallel angeordnete, umlaufende Transportketten (10, 10A, 10B) aufweist, dass zwischen den Transportketten (10, 10A, 10B) die Stufen (9) beziehungsweise Paletten (9) angeordnet sind und dass die Blockiervorrichtung (7, 7A, 7B, 47) zwei Blockierarme (8, 8A, 8B, 48A, 48B) aufweist, wobei jeder Transportkette (10, 10A, 10B) je ein Blockierarm (8, 8A, 8B, 48A, 48B) zugeordnet ist.

9. Fahrtreppe (1) oder Fahrsteig(1) nach einem der Ansprüche 1 bis 7, wobei das Stufenband (13) oder Palettenband (13) zwei zueinander parallel angeordnete, umlaufende Transportketten (10, 10A, 10B) aufweist, zwischen den Transportketten (10, 10A, 10B) die Stufen (9) beziehungsweise Paletten (9) angeordnet sind und im ersten Umlenkbereich (2) und im zweiten Umlenkbereich (3) je eine Blockiervorrichtung (7, 7A, 7B, 47) mit zwei Blockierarmen (8, 8A, 8B, 48A, 48B) angeordnet ist, wobei jeder Transportkette (10, 10A, 10B) je ein Blockierarm (8, 8A, 8B, 48A, 48B) des ersten Umlenkbereichs (2) und je ein Blockierarm (8, 8A, 8B, 48A, 48B) des zweiten Umlenkbereichs (3) zugeordnet ist.

10. Fahrtreppe (1) oder Fahrsteig (1) nach Anspruch 8 oder 9, wobei zwischen beiden Blockierarmen (8, 8A, 8B, 48A, 48B) einer Blockiervorrichtung (7, 7A, 7B, 47) ein Verbindungsstück (37) angeordnet ist, welches die Verriegelungssegmente (54) beider Blockierarme (8, 8A, 8B, 48A, 48B) verbindet.

11. Fahrtreppe (1) oder Fahrsteig (1) nach einem der Ansprüche 1 bis 10, wobei mindestens ein Kettenrad (14, 14A, 14B, 15) im Bereich der Eingriffsposition angeordnet und Gegenhalterung der Transportkette (10, 10A, 10B) ist.

12. Fahrtreppe (1) oder Fahrsteig (1) nach einem der Ansprüche 1 bis 11, wobei bei Vorhandensein mehrerer Blockierarme (8, 8A, 8B, 48A, 48B) jeder Blockierarm (8, 8A, 8B, 48A, 48B) auf ein Schaltelement (34, 34A, 34B) wirkt und jedes Schaltelement (34, 34A, 34B) mit einer Steuerungseinheit (75) zur Steuerung und Regelung eines Antriebsmotors des Stufenbandes (13) oder Palettenbandes (13) verbunden ist.

13. Fahrtreppe (1) oder Fahrsteig (1) nach einem der Ansprüche 1 bis 12, wobei die Blockiervorrichtung (7, 7A, 7B, 47) mindestens einen Stellantrieb (70) aufweist, mittels welchem der Blockierarm (8, 8A, 8B, 48A, 48B) verschwenkbar ist.

14. Fahrtreppe (1) oder Fahrsteig (1) nach einem der Ansprüche 1 bis 13, wobei die Blockiervorrichtung (7, 7A, 7B, 47) durch den Stellantrieb (70) nach Anspruch 13 oder durch einen separaten Verriegelungsantrieb in der Eingriffsposition beziehungsweise in der Freigabeposition verriegelbar ist.

## Claims

1. Escalator (1) with a step belt (13) or moving walkway (1) with a plate belt (13), which step belt or plate belt (13) comprises as least one transport chain (10, 10A, 10B) arranged to circulate between a first and a second deflecting region (2, 3) of the escalator (1) or moving walkway (1) and at which transport chain (10, 10A, 10B) steps (9) or plates (9) are arranged and connected with the transport chain (10, 10A, 10B), wherein the escalator (1) or the moving walkway (1) includes at least one blocking device (7, 7A, 7B, 47) which is arranged in stationary position and has at least one blocking arm (8, 8A, 8B, 48A, 48B), which blocking arm (8, 8A, 8B, 48A, 48B) can be brought into a release position or into a engagement position and in the engagement position engages in at least one link intermediate space of the transport chain (10, 10A, 10B), and the blocking arm is fixable in the respective release position or engagement position, **characterised in that** the blocking device (7, 7A, 7B, 47) comprises a switching element (34, 34A, 34B) for interrupting the power feed of a drive motor (19) of the escalator (1) or moving walkway (1), wherein the power feed is switched on when the blocking arm (8, 8A, 8B, 48A, 48B) is in the release position and the power feed is interrupted when the blocking arm (8, 8A, 8B. 48A, 48B) is in the engagement position.

2. Escalator (1) or moving walkway (1) according to claim 1, wherein the blocking device (7, 7A, 7B, 47) is arranged in stationary position in the first and/or second deflecting region (2, 3).

3. Escalator (1) or moving walkway (1) according to claim 1 or 2, wherein the blocking arm (8, 8A, 8B, 48A, 48B) is mounted to be pivotable between the release position and the engagement position.

4. Escalator (1) or moving walkway (1) according to any one of claims 1 to 3, wherein the blocking device (7, 7A, 7B, 47) comprises a bearing block (52) which has a first detent point (61) corresponding with the release position and a second detent point (62) corresponding with the engagement position and the blocking arm (8, 8A, 8B. 48A, 48B) comprises a locking segment (54), wherein the blocking arm (8, 8A, 8B, 48A, 48B) is pivotably mounted on the bearing block (52) and the blocking arm (8, 8A, 8B, 48A, 48B) is fixable in the release position or in the engagement position by detenting of the locking segment (54) in the detent points (61, 62).

5. Escalator (1) or moving walkway (1) according to claim 4, wherein the locking segment (54) is guided at the blocking arm (8, 8A, 8B, 48A, 48B) to be linearly displaceable and this is secured in the first or the second detent point (61, 62) by a spring element (63) acting on the locking segment (54).

6. Escalator (1) or moving walkway (1) according to claim 4 or 5, wherein the locking segment (54) comprises a grip (59) and a tread tongue (60).

7. Escalator (1) or moving walkway (1) according to any one of claims 1 to 6, wherein a stationary plate bracket (31) with at least one slot (32) or with at least one groove (32) with groove blocks is arranged in the first and/or second deflecting region (2, 3), wherein the slot (52) or the groove (32) is arranged in the plane with respect to the longitudinal direction of the escalator (1) or the moving walkway (1) and orthogonally to this longitudinal direction and wherein at least one blocking device (7, 7A, 7B, 47) is fixed at the stationary plate bracket (31).

8. Escalator (1) or moving walkway (1) according to any one of claims 1 to 7, wherein the step belt (13) or the plate belt (13) comprises two circulating transport chains (10, 10A, 10B) arranged parallel to one another, that the steps (9) or plates (9) are arranged between the transport chains (10, 10A, 10B) and that the blocking device (7, 7A, 7B, 47) comprises two blocking arms (8, 8A, 8B, 48A, 48B), wherein a respective blocking arm (8, 8A, 8B, 48A, 48B) is associated with each transport chain (10, 10A, 10B).

9. Escalator (1) or moving walkway (1) according to any one of claims 1 to 7, wherein the step belt (13) or plate belt (13) comprises two circulating transport chains (10, 10A, 10B), which are arranged parallel to one another and between which the steps (9) or plates (9) are arranged, and a respective blocking device (7, 7A, 7B, 47) with two blocking arms (8, 8A, 8B, 48A, 48B) is arranged in each of the first deflecting region (2) and second deflecting region (3), wherein a respective blocking arm (8, 8A, 8B, 48A, 48B) of the first deflecting region (2) and the respecting blocking arm (8, 8A, 8B, 48A, 48B) of the second deflecting region (3) are associated with each transport chain (10, 10A, 10B).

10. Escalator (1) or moving walkway (1) according to claim 8 or 9, wherein a connecting member (37) which connects the locking segments (54) of the two blocking arms (8, 8A, 8B, 48A, 48B) is arranged between the two blocking arms (8, 8A, 8B, 48A, 48B) of a blocking device (7, 7A, 7B, 47).

11. Escalator (1) or moving walkway (1) according to any one of claims 1 to 10, wherein at least one chainwheel (14, 14A, 14B, 15) is arranged in the region of the engagement position and is an opposing mount of the transport chain (10, 10A, 10B).

12. Escalator (1) or moving walkway (1) according to any one of claims 1 to 11, wherein in the case of a plurality of blocking arms (8, 8A, 8B, 48A, 48B) each blocking arm (8, 8A, 8B, 48A, 48B) acts on a switching element (34, 34A, 34B) and each switching element (34, 34A, 34B) is connected with a control unit (75) for controlling and regulating a drive motor of the step belt (13) or the plate belt (13).

13. Escalator (1) or moving walkway (1) according to any one of claims 1 to 12, wherein the blocking device (7, 7A, 78B, 47) comprises at least one setting drive (70) by means of which the blocking arm (8, 8A, 8B, 48A, 48B) is pivotable.

14. Escalator (1) or moving walkway (1) according to any one of claims 1 to 13, wherein the blocking device (7, 7A, 7B, 47) is lockable by the setting drive (70) according to claim 13 or by a separate locking drive in the engagement position or in the release position.

## Revendications

1. Escalier roulant (1) avec une bande de marches (13) ou trottoir roulant avec une bande de palettes (13), laquelle bande de marches ou de palettes (13) comporte au moins une chaîne de transport (10, 10A, 10B) qui est disposée de manière à circuler entre des première et seconde zones de déviation (2, 3) de l'escalier roulant (1) ou du trottoir roulant (1) et sur laquelle des marches (9) ou des palettes (9) sont disposées et sont reliées à la chaîne de transport (10, 10A, 10B), étant précisé que l'escalier roulant (1) ou le trottoir roulant (1) contient au moins un dispositif de blocage (7, 7A, 7B, 47), qui est disposé de manière fixe et qui comporte au moins un bras de blocage (8, 8A, 8B, 48A, 48B), lequel bras de blocage (8, 8A, 8B, 48A, 48B) est apte à être amené dans une position de déblocage et dans une position de prise et, dans la position de prise, vient en prise dans au moins un espace entre les maillons de la chaîne de transport (10, 10A, 10B), et le bras de blocage est apte à être immobilisé dans la position de déblocage et dans la position de prise, respectivement,
**caractérisé en ce que** le dispositif de blocage (7, 7A, 7B, 47) comporte un élément commutateur (34, 34A, 34B) pour couper l'alimentation électrique d'un moteur d'entraînement (19) de l'escalier roulant (1) ou du trottoir roulant (1), étant précisé que l'alimentation électrique est activée si le bras de blocage (8, 8A, 8B, 48A, 48B) est en position de déblocage, et que l'alimentation électrique est coupée si le bras de blocage (8, 8A, 8B, 48A, 48B) est en position de prise.

2. Escalier roulant (1) ou trottoir roulant (1) selon la revendication 1, étant précisé que le dispositif de blocage (7, 7A, 7B, 47) est disposé de manière fixe dans les première et/ou seconde zones de déviation (2, 3).

3. Escalier roulant (1) ou trottoir roulant (1) selon la revendication 1 ou 2, étant précisé que le bras de blocage (8, 8A, 8B, 48A, 48B) est monté pivotant entre la position de déblocage et la position de prise.

4. Escalier roulant (1) ou trottoir roulant (1) selon l'une des revendications 1 à 3, étant précisé que le dispositif de blocage (7, 7A, 7B, 47) comporte un palier (52) qui présente un premier point d'enclenchement (61) correspondant à la position de déblocage, et un second point d'enclenchement (62) correspondant à la position de prise, et que le bras de blocage (8, 8A, 8B, 48A, 48B) comporte un segment de verrouillage (54), étant précisé que le bras de blocage (8, 8A, 8B, 48A, 48B) est monté pivotant sur le palier (52) et que le bras de blocage (8, 8A, 8B, 48A, 48B) est apte à être immobilisé dans la position de déblocage ou dans la position de prise grâce à l'enclenchement du segment de verrouillage (54) dans les points d'enclenchement (61, 62).

5. Escalier roulant (1) ou trottoir roulant (1) selon la revendication 4, étant précisé que le segment de verrouillage (54) est guidé mobile linéairement sur le bras de blocage (8, 8A, 8B, 48A, 48B), et qu'il est bloqué dans le premier ou le second point d'enclenchement (61, 62) par un élément à ressort (63) qui agit sur le segment de verrouillage (54).

6. Escalier roulant (1) ou trottoir roulant (1) selon la revendication 4 ou 5, étant précisé que le segment de verrouillage (54) comporte une poignée (59) et une pédale (60).

7. Escalier roulant (1) ou trottoir roulant (1) selon l'une des revendications 1 à 6, étant précisé que dans les première et/ou seconde zones de déviation (2, 3), il est prévu une console de plaque stationnaire (31) avec au moins un trou oblong (32) ou avec au moins une rainure (32) pourvue de coulisseaux, étant précisé que le trou oblong (32) ou la rainure (32) est disposé dans le plan par rapport à l'extension longitudinale de l'escalier roulant (1) ou du trottoir roulant (1) et est orthogonal par rapport à cette extension longitudinale, et qu'au moins un dispositif de blocage (7, 7A, 7B, 47) est fixé à la console de plaque stationnaire (31).

8. Escalier roulant (1) ou trottoir roulant (1) selon l'une des revendications 1 à 7, étant précisé que la bande de marches (13) ou la bande de palettes (13) comporte deux chaînes de transport sans fin (10, 10A, 10B) qui sont disposées parallèlement l'une à l'autre, en ce qu'entre les chaînes de transport (10, 10A, 10B) sont disposées les marches (9) ou les palettes (9) et en ce que le dispositif de blocage (7, 7A, 7B, 47) comporte deux bras de blocage (8, 8A, 8B, 48A, 48B), étant précisé qu'un bras de blocage (8, 8A, 8B, 48A, 48B) est associé à chaque chaîne de transport (10, 10A, 10B).

9. Escalier roulant (1) ou trottoir roulant (1) selon l'une des revendications 1 à 7, étant précisé que la bande de marches (13) ou la bande de palettes (13) comporte deux chaînes de transport sans fin (10, 10A, 10B) qui sont disposées parallèlement l'une à l'autre, en ce qu'entre les chaînes de transport (10, 10A, 10B) sont disposées les marches (9) ou les palettes (9), et en ce qu'il est prévu dans la première zone de déviation (2) et dans la seconde zone de déviation (3) un dispositif de blocage (7, 7A, 7B, 47) avec deux bras de blocage (8, 8A, 8B, 48A, 48B), étant précisé qu'un bras de blocage (8, 8A, 8B, 48A, 48B) de la première zone de déviation (2) et un bras de blocage (8, 8A, 8B, 48A, 48B) de la seconde zone de déviation (3) sont associés à chaque chaîne de transport (10, 10A, 10B).

10. Escalier roulant (1) ou trottoir roulant (1) selon la revendication 8 ou 9, étant précisé qu'il est prévu entre les deux bras de blocage (8, 8A, 8B, 48A, 48B) d'un dispositif de blocage (7, 7A, 7B, 47) un élément de liaison (47) qui relie les segments de verrouillage (54) des deux bras de blocage (8, 8A, 8B, 48A, 48B).

11. Escalier roulant (1) ou trottoir roulant (1) selon l'une des revendications 1 à 10, étant précisé qu'au moins une roue à chaîne (14, 14A, 14B, 15) est disposée dans la zone de la position de prise et constitue un contre-appui de la chaîne de transport (10, 10A, 10B).

12. Escalier roulant (1) ou trottoir roulant (1) selon l'une des revendications 1 à 11, étant précisé que s'il y a plusieurs bras de blocage (8, 8A, 8B, 48A, 48B), chaque bras de blocage (8, 8A, 8B, 48A, 48B) agit sur un élément commutateur (34, 34A, 34B), et chaque élément commutateur (34, 34A, 34B) est relié à une unité de commande (75) pour la commande et la régulation d'un moteur d'entraînement de la bande de marches (13) ou de la bande de palettes (13).

13. Escalier roulant (1) ou trottoir roulant (1) selon l'une des revendications 1 à 12, étant précisé que le dispositif de blocage (7, 7A, 7B, 47) comporte au moins un actionneur (70) à l'aide duquel le bras de blocage (8, 8A, 8B, 48A, 48B) est apte à pivoter.

14. Escalier roulant (1) ou trottoir roulant (1) selon l'une des revendications 1 à 13, étant précisé que le dispositif de blocage (7, 7A, 7B, 47) est apte à être verrouillé dans la position de prise ou dans la position de déblocage grâce à l'actionneur (70) selon la revendication 13 ou à un entraînement de verrouillage séparé.
